# EUROPÄISCHE PATENTSCHRIFT

(11) **EP 2 923 066 B1**
(45) Veröffentlichungstag und Bekanntmachung des Hinweises auf die Patenterteilung: **11.03.2020**
(21) Anmeldenummer: 13773738.3
(22) Anmeldetag: 07.10.2013
(51) Int. Cl.: F02M 59/36, F02M 63/00, F02M 59/46

(54) **VENTILEINRICHTUNG**
VALVE DEVICE
ENSEMBLE SOUPAPE

(30) Priorität: 26.11.2012 DE 102012221543
(43) Veröffentlichungstag der Anmeldung: 30.09.2015
(73) Patentinhaber: Robert Bosch GmbH, 70442 Stuttgart (DE)
(72) Erfinder: KLEINDL, Michael, 71701 Schwieberdingen (DE); LATIF, Tamim, 70180 Stuttgart (DE)
(86) Internationale Anmeldenummer: PCT/EP2013/070768
(87) Internationale Veröffentlichungsnummer: WO 2014/079624

(56) Entgegenhaltungen:
- CH-A- 218 190
- DE-A1-102004 010 289
- DE-A1-102005 061 886
- GB-A- 727 774
- US-A- 2 492 280

## Beschreibung

### Stand der Technik

Die Erfindung betrifft eine Ventileinrichtung nach dem Oberbegriff des Patentanspruchs 1 sowie eine Hochdruckpumpe nach dem nebengeordneten Patentanspruch 8.
Ventileinrichtungen, beispielsweise Auslassventile einer Hochdruckpumpe eines Kraftstoffsystems einer Brennkraftmaschine, sind vom Markt her bekannt. Häufig weisen solche Ventileinrichtungen einen Ventilkörper auf, der an einem Dichtabschnitt gegen einen gehäuseseitigen Dichtsitz anliegen und die Ventileinrichtung somit schließen kann.
Aus der EP 2 388 470 A1 und der EP 2 302 195 A1 sind Ventileinrichtungen bekannt, welche Führungsflächen zur Führung des Ventilkörpers längs einer Bewegungsachse und Bewegungsbegrenzungsflächen zur Begrenzung eines Öffnungswegs des Ventilkörpers aufweisen. Zu weiteren Ventileinrichtungen siehe: DE 10 2005 061 886 A1, CH 218 190 A, GP 727774 A und US 2,492, 280. Die DE 10 2004 010 289 A1 offenbart ein Einspritzventil.
Der vorliegenden Erfindung liegt die Aufgabe zugrunde, eine möglichst wirtschaftlich herstellbare Ventileinrichtung anzugeben.

### Offenbarung der Erfindung

Das der Erfindung zugrunde liegende Problem wird durch eine Ventileinrichtung nach Patentanspruch 1 sowie durch eine Hochdruckpumpe nach dem nebengeordneten Patentanspruch 8 gelöst. Vorteilhafte Weiterbildungen sind in den Unteransprüchen angegeben. Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf nochmals explizit hingewiesen wird.
Bei der erfindungsgemäßen Ventileinrichtung ist ein Führungselement vorgesehen, welches ausschließlich zur Führung des Ventilkörpers dient. Der Dichtsitz und die Bewegungsbegrenzungsfläche sind von dem Führungselement separat bereitgestellt, sodass das Führungselement ausschließlich im Hinblick auf seine Funktion zur Führung des Ventilkörpers ausgelegt werden kann. Dies ermöglicht eine besonders wirtschaftliche und toleranzunempfindliche Herstellung des Führungselements und der Ventileinrichtung.

Erfindungsgemäß sind der Dichtsitz und die Bewegungsbegrenzungsfläche von dem Führungselement separat bereitgestellt und kann dasselbe Führungselement für Ventileinrichtungen mit unterschiedlich gestalteten Dichtsitzen und/oder Bewegungsbegrenzungsflächen verwendet werden. Das Führungselement ist daher besonders gut für eine Massenfertigung geeignet. Gleichzeitig können die Eigenschaften der Ventileinrichtung kostengünstig beeinflusst werden, beispielsweise durch Wahl einer bestimmten Dichtsitzgeometrie und/oder durch Wahl der Lage der Bewegungsbegrenzungsfläche, welche eine Einstellung des Hubs, also des Bewegungswegs des Ventilkörpers längs der Bewegungsachse, ermöglicht.

Erfindungsgemäß ist das Führungselement separat bereitgestellt, so wird eine besonders montagefreundliche Lösung geschaffen. Der Ausschluss weiterer Funktionen ermöglicht außerdem eine Reduzierung von Toleranzeinflüssen. Insgesamt kann eine besonders wirtschaftlich herstellbare Ventileinrichtung geschaffen werden.
Bei der erfindungsgemäßen Ventileinrichtung handelt es sich um ein Rückschlagventil.

Erfindungsgemäß ist das Führungselement in Form eines Stanzteils hergestellt. Dies ermöglicht eine reproduzierbar genaue und gleichzeitig wirtschaftliche Herstellung des Führungselements.

Zur weiteren Verbesserung der Herstellbarkeit der Ventileinrichtung wird vorgeschlagen, dass das Führungselement und das Gehäuse mittels Kraftschluss und/oder Formschluss miteinander verbunden sind, insbesondere unter Verzicht auf eine stoffschlüssige Verbindung. Auf diese Weise können das Führungselement und das Gehäuse in einfacher Weise miteinander gefügt, beispielsweise miteinander verpresst, werden.

Nach einer Ausführungsform der Erfindung ist vorgesehen, dass der Ventilkörper in Form eines Tiefziehteils hergestellt ist. Dies ermöglicht eine wirtschaftliche Herstellung eines Dichtabschnitts und ermöglicht es insbesondere, einen im Wesentlichen topfförmigen Ventilkörperabschnitt bereitzustellen, in welchem zumindest Abschnitte einer Ventilfeder aufnehmbar sind.

Es ist möglich, dass der Dichtsitz mit dem Gehäuse einstückig ausgebildet ist. Bevorzugt ist es jedoch, wenn der Dichtsitz von einem von dem Gehäuse separaten Dichtsitzelement bereitgestellt ist. Dies ermöglicht es, unter Verwendung identischer Gehäuse unterschiedliche Dichtsitzelemente zu verwenden und diese Dichtsitzelemente im Hinblick auf eine gewünschte Dichtgeometrie optimieren zu können.

Zur Vereinfachung der Montage des Dichtsitzelements wird vorgeschlagen, dass das Dichtsitzelement und das Gehäuse mittels Kraftschluss und/oder Formschluss miteinander verbunden sind, insbesondere unter Verzicht auf eine stoffschlüssige Verbindung. Beispielsweise sind das Dichtsitzelement und das Gehäuse mittels eines Presssitzes miteinander verbunden.

Erfindungsgemäß ist vorgesehen, dass die Bewegungsbegrenzungsfläche von einem von dem Gehäuse separaten Bewegungsbegrenzungselement bereitgestellt ist. Dies vereinfacht die Montage der Ventileinrichtung. Ferner kann bei Verwendung desselben Gehäuses und Bewegungsbegrenzungselemente mit unterschiedlichen Abmessungen eine Lage der Bewegungsbegrenzungsfläche und somit ein maximaler Bewegungsweg des Ventilkörpers in einfacher Weise eingestellt werden.

Nach einer bevorzugten Ausführungsform ist das Bewegungsbegrenzungselement in Form eines Stanzteils hergestellt, wodurch kostengünstig eine reproduzierbar genaue Geometrie des Bewegungsbegrenzungselements bereitgestellt werden kann.

Es ist bevorzugt, dass Bewegungsbegrenzungselement und das Gehäuse mittels Kraftschluss und/oder Formschluss, insbesondere unter Verzicht auf eine stoffschlüssige Verbindung, miteinander verbunden sind. Dies ermöglicht eine Vereinfachung der Montage mittels eines einfachen Fügevorgangs von Bewegungsbegrenzungselement und Gehäuse.

Nachfolgend werden beispielhafte Ausführungsformen der Erfindung unter Bezugnahme auf die Zeichnung erläutert. In der Zeichnung zeigen:
- Figur 1: ein vereinfachtes Schema eines Kraftstoffsystems mit einer Hochdruckpumpe und einer Ventileinrichtung; und
- Figur 2: eine vereinfachte Schnittdarstellung einer Ausführungsform der Ventileinrichtung gemäß Figur 1.

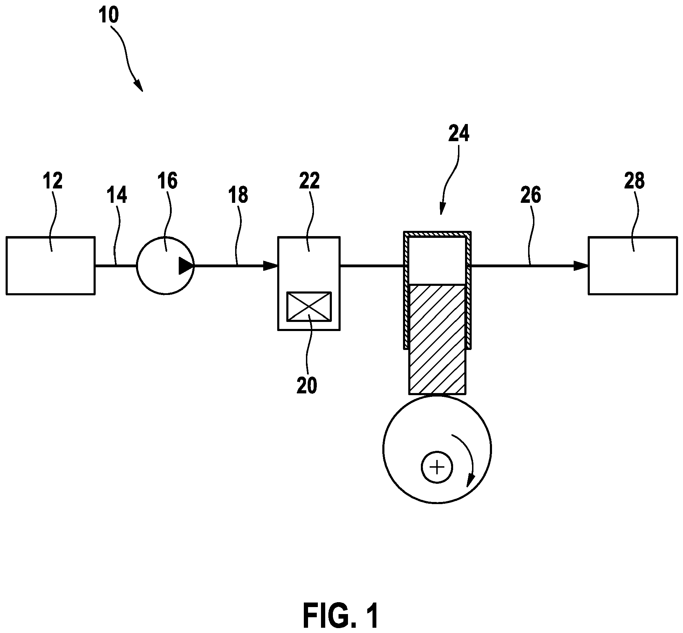

Figur 1 zeigt ein Kraftstoffsystem 10 einer Brennkraftmaschine in einer stark vereinfachten Darstellung. Aus einem Kraftstofftank 12 wird Kraftstoff über eine Saugleitung 14, mittels einer Vorförderpumpe 16, über eine Niederdruckleitung 18, und über ein Einlassventil 20 einem Förderraum 23 einer Hochdruckpumpe 24 zugeführt.

Das Einlassventil 20 ist beispielsweise ein Mengensteuerventil und von einem Elektromagneten betätigbar. Alternativ zu einem Elektromagneten kann auch beispielsweise ein Piezoaktor oder ein hydraulischer Aktor verwendet werden.

Die Hochdruckpumpe 24 weist ein Auslassventil auf, das in Form einer nachfolgend detaillierter beschriebenen Ventileinrichtung 22 ausgebildet ist. Die Ventileinrichtung 22 kommuniziert über eine Hochdruckleitung 26 mit einem Hochdruckspeicher 28.

Beim Betrieb des Kraftstoffsystems 10 fördert die Vorförderpumpe 16 Kraftstoff vom Kraftstofftank 12 in die Niederdruckleitung 18. Dabei bestimmt das Einlassventil 20 die dem Förderraum 23 der Hochdruckpumpe 24 zugeführte Kraftstoffmenge.

Die Funktion der Ventileinrichtung 22 besteht darin, in einer Förderphase der Hochdruckpumpe 24 zu öffnen, um eine Fluidverbindung zwischen dem Förderraum 23 und dem Hochdruckspeicher 28 herzustellen, damit der Hochdruckspeicher 28 mit druckbeaufschlagtem Fluid gefüllt werden kann. In einer Saugphase der Hochdruckpumpe 24 schließt die Ventileinrichtung 22, um einen unerwünschten Rückfluss von Fluid aus dem Hochdruckspeicher 28 in den Förderraum 23 zu verhindern.

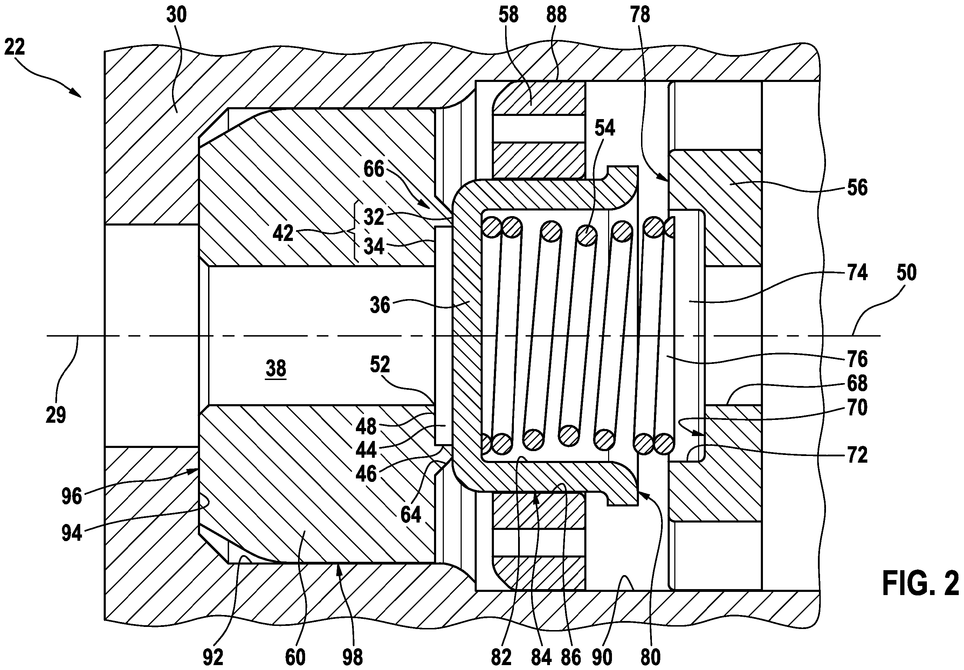

Figur 2 zeigt eine Ausführungsform der Ventileinrichtung 22 gemäß Figur 1 in einer vereinfachten Schnittdarstellung. Die in der Zeichnung dargestellten Elemente der Ventileinrichtung 22 sind im Wesentlichen rotationssymmetrisch um eine Längsachse 29 ausgeführt und umfassen ein Gehäuse 30 mit einem Dichtsitz 32, an dem ein Dichtabschnitt 34 eines Ventilkörpers 36 bei geschlossener Ventileinrichtung 22 anliegt.

Die Ventileinrichtung 22 weist stromaufwärts des Dichtsitzes 32 einen sich parallel zu der Längsachse 29 erstreckenden Strömungskanal 38 auf.

Der Dichtsitz 32 und der Dichtabschnitt 34 sind flächig und parallel zueinander ausgeführt und bilden gemeinsam einen Dichtbereich 42.

Optional ist stromaufwärts von dem Dichtbereich 42 und stromabwärts des Strömungskanals 38 mittels einer stufenartigen Ausnehmung in dem Gehäuse 30 ein Zerfallraum 44 gebildet, der von einer sich vom Dichtbereich 42 bzw. dessen Ebene rechtwinklig erstreckenden Prallwand 46 und von einer Begrenzungswand 48 begrenzt ist. Der Zerfallraum 44 dient dazu, den Dichtsitz 32 und den Dichtabschnitt 34 vor Kavitationserosion zu schützen.

Die Begrenzungswand 48 erstreckt sich senkrecht zu einer Bewegungsachse 50, entlang welcher der Ventilkörper 36 für ein Öffnen und Schließen der Ventileinrichtung 22 bewegbar ist. Die Bewegungsachse 50 und die Längsachse 29 sind vorzugsweise zueinander parallel und insbesondere miteinander identisch.

Ein Fluid, insbesondere Kraftstoff, strömt zunächst innerhalb des Strömungskanals 38 im Wesentlichen parallel zu der Längsachse 29 und wird dann vor dem Ventilkörper 36 radial nach außen umgelenkt. Die Umlenkung der Strömung erfolgt stromabwärts einer den Strömungskanal 38 endseitig begrenzenden Kante 52 vergleichsweise frühzeitig und verlustarm mittels der hydraulischen Wirkung des Zerfallraums 44.

Die Ventileinrichtung 22 umfasst außerdem eine Ventilfeder 54, welche den Ventilkörper 36 mit einer Schließkraft beaufschlagt. Die Ventilfeder 54 stützt sich an einem Bewegungsbegrenzungselement 56 ab. Das Bewegungsbegrenzungselement 56 kann von dem Gehäuse 30 gebildet sein. Es ist jedoch bevorzugt, dass das Bewegungsbegrenzungselement 56 von dem Gehäuse 30 separat bereitgestellt ist.

Zur Führung des Ventilkörpers 36 längs der Bewegungsachse 50 ist ein von dem Gehäuse 30 separat bereitgestelltes Führungselement 58 vorgesehen.

Der Dichtsitz 32 kann von dem Gehäuse 30 gebildet sein. Es ist jedoch bevorzugt, dass der Dichtsitz 32 von einem Dichtsitzelement 60 gebildet ist, das von dem Gehäuse 30 separat bereitgestellt ist.

In einem geöffneten Zustand der Ventileinrichtung 22 strömt Fluid, insbesondere Kraftstoff, in dem Dichtbereich 42 in einer Fluidströmungsrichtung. An den Dichtsitz 32 schließt sich auf der der Prallwand 46 abgewandten Seite des Dichtsitzes 32 eine Strömungsführungsfläche 64 an.

Die Prallwand 46, der Dichtsitz 32 und die Strömungsführungsfläche 64 bilden gemeinsam einen gehäuseseitigen Vorsprung 66.

Das Bewegungsbegrenzungselement 56 ist in Form eines Stanzteils hergestellt und weist eine sich entlang der Längsachse 29 erstreckende zentrale Öffnung 68 auf. Bevorzugt ist es, dass die Öffnung 68 denselben Durchmesser aufweist wie der Strömungskanal 38 des Dichtsitzelements 60.

Das Bewegungsbegrenzungselement 56 weist eine Federabstützfläche 70 auf, welche gemeinsam mit einer Federführungsfläche 72 einen Federaufnahmebereich 74 begrenzt.

Die Ventilfeder 54 stützt sich mit einem dem Dichtbereich 42 abgewandten Federende 76 an der Federabstützfläche 70 ab. In der Zeichnung sind das Federende 76 und die Federabstützfläche 70 zur Verbesserung der Übersichtlichkeit zueinander beabstandet dargestellt.
Das Bewegungsbegrenzungselement 56 weist eine dem Ventilkörper 36 zugewandte Bewegungsbegrenzungsfläche 78 auf, welche sich vorzugsweise in einer zu der Bewegungsachse 50 des Ventilkörpers 36 senkrechten Ebene erstreckt.

Der Ventilkörper 36 ist in Form eines topfförmigen Tiefziehteils ausgebildet und weist auf seiner dem Dichtabschnitt 34 abgewandten Seite eine insbesondere ringförmige Anschlagfläche 80 auf, welche in einer maximal geöffneten Stellung des Ventilkörpers 36 an der Bewegungsbegrenzungsfläche 78 des Bewegungsbegrenzungselements 56 anliegt.

Der Ventilkörper 36 weist einen im Wesentlichen zylindrischen Innenraum 82 zur Aufnahme der Ventilfeder 54 auf. Der Ventilkörper 36 weist ferner eine zylindrische Außenfläche 84 auf, welche mit Spiel in einer hohlzylindrischen Führungsfläche 86 des Führungselements 58 aufgenommen ist.

Das Führungselement 58 weist eine nach radial außen weisende zylindrische Außenfläche 88 auf, welche mittels eines Presssitzes in einer hohlzylindrischen Gehäuseöffnung 90 des Gehäuses 30 aufgenommen ist.

Die Gehäuseöffnung 90 verengt sich in einem Bereich 92 auf Höhe des Dichtsitzelements 60. Der Bereich 92 grenzt an eine sich senkrecht zu der Längsachse 29 erstreckende Anlagefläche 94, an welcher das Dichtsitzelement 60 mit einer Stirnfläche 96 anliegt. Das Dichtsitzelement 60 weist ferner eine zylindrische Außenfläche 98 auf, welche in dem Bereich 92 des Gehäuses 30 mit diesem verpresst ist.

Die Funktionen "Dichten", "Führen" und "Bewegungsweg begrenzen" sind mithilfe der voneinander separaten Bauteile in Form des Dichtsitzelements 60, des Führungselements 58 und des Bewegungsbegrenzungselements 56 bereitgestellt. Insbesondere hat das Führungselement 58 ausschließlich eine Führungsfunktion und keine Dichtungsfunktion und keine Wegbegrenzungsfunktion. Das Dichtsitzelement 60 hat ausschließlich eine Dichtfunktion und keine Führungsfunktion und keine Wegbegrenzungsfunktion. Das Bewegungsbegrenzungselements 56 hat ausschließliche die Funktion, den Bewegungsweg des Ventilkörpers 36 in Öffnungsrichtung zu begrenzen und hat keine Führungsfunktion und keine Dichtungsfunktion.

## Patentansprüche

1. Rückschlagventil (22), mit einem Gehäuse (30), einem Strömungskanal (38) und einem in dem Strömungskanal (38) angeordneten Ventilkörper (36), der bei geschlossenem Rückschlagventil (22) mit einem Dichtabschnitt (34) an einem gehäuseseitigen Dichtsitz (32) anliegt, wobei der Ventilkörper (36) mittels einer gehäuseseitigen Führungsfläche (86) längs einer Bewegungsachse (50) geführt ist und bei maximal geöffnetem Rückschlagventil (22) mit einer Anschlagfläche (80) an einer gehäuseseitigen Bewegungsbegrenzungsfläche (78) anliegt, **dadurch gekennzeichnet, dass** die Führungsfläche (86) von einem Führungselement (58) bereitgestellt ist und der Dichtsitz (32) und die Bewegungsbegrenzungsfläche (78) von dem Führungselement (58) separat bereitgestellt sind, wobei dass das Führungselement (58) in Form eines Stanzteils hergestellt ist und dass die Bewegungsbegrenzungsfläche (78) von einem von dem Gehäuse (30) separaten Bewegungsbegrenzungselement (56) bereitgestellt ist.

2. Rückschlagventil (22) nach dem voranstehenden Anspruch, **dadurch gekennzeichnet, dass** das Führungselement (58) und das Gehäuse (30) mittels Kraftschluss und/oder Formschluss miteinander verbunden sind.

3. Rückschlagventil (22) nach einem der voranstehenden Ansprüche, **dadurch gekennzeichnet, dass** der Ventilkörper (36) in Form eines Tiefziehteils hergestellt ist.

4. Rückschlagventil (22) nach einem der voranstehenden Ansprüche, **dadurch gekennzeichnet, dass** der Dichtsitz (32) von einem von dem Gehäuse (30) separaten Dichtsitzelement (60) bereitgestellt ist.

5. Rückschlagventil (22) nach Anspruch 4, **dadurch gekennzeichnet, dass** das Dichtsitzelement (60) und das Gehäuse (30) mittels Kraftschluss und/oder Formschluss miteinander verbunden sind.

6. Rückschlagventil (22) nach einem der voranstehenden Ansprüche, **dadurch gekennzeichnet, dass** das Bewegungsbegrenzungselement (56) in Form eines Stanzteils hergestellt ist.

7. Rückschlagventil (22) nach einem der voranstehenden Ansprüche, **dadurch gekennzeichnet, dass** das Bewegungsbegrenzungselement (56) und das Gehäuse (30) mittels Kraftschluss und/oder Formschluss miteinander verbunden sind.

8. Hochdruckpumpe (24) eines Kraftstoffsystems (10) einer Brennkraftmaschine, umfassend ein Auslassventil zum Auslassen von Kraftstoff aus einem Förderraum (23) der Hochdruckpumpe (24), **dadurch gekennzeichnet, dass** das Auslassventil ein Rückschlagventil (22) nach wenigstens einem der voranstehenden Ansprüche umfasst oder als ein solches Rückschlagventil (22) ausgebildet ist.

## Claims

1. Check valve (22), having a housing (30), a flow duct (38) and a valve body (36) which is arranged in the flow duct (38) and bears with a sealing section (34) against a housing-side sealing seat (32) when the check valve (22) is closed, the valve body (36) being guided along a movement axis (50) by means of a housing-side guide face (86) and, when the check valve (22) is open to its maximum, bearing with a stop face (80) against a housing-side movement limiting face (78), **characterized in that** the guide face (86) is provided by a guide element (58), and the sealing seat (32) and the movement limiting face (78) are provided separately by the guide element (58), wherein **in that** the guide element (58) is manufactured in the form of a stamped part and **in that** the movement limiting face (78) is provided by a movement limiting element (56) which is separate from the housing (30).

2. Check valve (22) according to the preceding claim, **characterized in that** the guide element (58) and the housing (30) are connected to one another by means of a non-positive and/or positively locking connection.

3. Check valve (22) according to either of the preceding claims, **characterized in that** the valve body (36) is manufactured in the form of a deep drawn part.

4. Check valve (22) according to one of the preceding claims, **characterized in that** the sealing seat (32) is provided by a sealing seat element (60) which is separate from the housing (30).

5. Check valve (22) according to Claim 4, **characterized in that** the sealing seat element (60) and the housing (30) are connected to one another by means of a non-positive and/or positively locking connection.

6. Check valve (22) according to one of the preceding claims, **characterized in that** the movement limiting element (56) is manufactured in the form of a stamped part.

7. Check valve (22) according to one of the preceding claims, **characterized in that** the movement limiting element (56) and the housing (30) are connected to one another by means of a non-positive and/or positively locking connection.

8. High pressure pump (24) of a fuel system (10) of an internal combustion engine, comprising an outlet valve for discharging fuel from a delivery space (23) of the high pressure pump (24), **characterized in that** the outlet valve comprises a check valve (22) according to at least one of the preceding claims or is configured as such a check valve (22).

## Revendications

1. Soupape antiretour (22), comprenant un boîtier (30), un canal d'écoulement (38) et un corps de soupape (36) disposé dans le canal d'écoulement (38), qui, lorsque la soupape antiretour (22) est fermée, s'applique avec une portion d'étanchéité (34) contre un siège d'étanchéité (32) du côté du boîtier, le corps de soupape (36) étant guidé au moyen d'une surface de guidage (86) du côté du boîtier le long d'un axe de déplacement (50) et lorsque la soupape antiretour (22) est ouverte au maximum, s'appliquant avec une surface d'appui (80) contre une surface de limitation de déplacement (78) du côté du boîtier,
**caractérisée en ce que**
la surface de guidage (86) est fournie par un élément de guidage (58) et le siège d'étanchéité (32) et la surface de limitation de déplacement (78) sont fournis séparément par l'élément de guidage (58), dans lequel **en ce que** l'élément de guidage (58) est fabriqué sous la forme d'une pièce estampée et **en ce que** la surface de limitation de déplacement (78) est fournie par un élément de limitation de déplacement (56) séparé du boîtier (30).

2. Soupape antiretour (22) selon la revendication précédente, **caractérisée en ce que** l'élément de guidage (58) et le boîtier (30) sont connectés l'un à l'autre au moyen d'un engagement par force et/ou par correspondance de formes.

3. Soupape antiretour (22) selon l'une quelconque des revendications précédentes, **caractérisée en ce que** le corps de soupape (36) est fabriqué sous la forme d'une pièce emboutie profond.

4. Soupape antiretour (22) selon l'une quelconque des revendications précédentes, **caractérisée en ce que** le siège d'étanchéité (32) est fourni par un élément de siège d'étanchéité (60) séparé du boîtier (30).

5. Soupape antiretour (22) selon la revendication 4, **caractérisée en ce que** l'élément de siège d'étanchéité (60) et le boîtier (30) sont connectés l'un à l'autre au moyen d'un engagement par force et/ou par correspondance de formes.

6. Soupape antiretour (22) selon l'une quelconque des revendications précédentes, **caractérisée en ce que** l'élément de limitation de déplacement (56) est fabriqué sous la forme d'une pièce estampée.

7. Soupape antiretour (22) selon l'une quelconque des revendications précédentes, **caractérisée en ce que** l'élément de limitation de déplacement (56) et le boîtier (30) sont connectés l'un à l'autre par engagement par force et/ou par correspondance de formes.

8. Pompe à haute pression (24) d'un système de carburant (10) d'un moteur à combustion interne, comprenant une soupape de sortie pour la sortie de carburant hors d'un espace de refoulement (23) de la pompe à haute pression (24), **caractérisée en ce que** la soupape de sortie comprend une soupape antiretour (22) selon au moins l'une quelconque des revendications précédentes ou est réalisée sous la forme d'une telle soupape antiretour (22).
